# EUROPÄISCHE PATENTSCHRIFT

(11) **EP 2 608 995 B1**
(45) Veröffentlichungstag und Bekanntmachung des Hinweises auf die Patenterteilung: **23.08.2017**
(21) Anmeldenummer: 11730642.3
(22) Anmeldetag: 07.07.2011
(51) Int. Cl.: B61C 9/12

(54) **ANTRIEBSEINRICHTUNG FÜR EINEN TRIEBWAGEN**
DRIVE ARRANGEMENT FOR A RAILCAR
DISPOSITIF D'ENTRAÎNEMENT POUR UNE AUTOMOTRICE

(30) Priorität: 27.08.2010 DE 102010039862
(43) Veröffentlichungstag der Anmeldung: 03.07.2013
(73) Patentinhaber: ZF Friedrichshafen AG, 88046 Friedrichshafen (DE)
(72) Erfinder: ENOEDY, Emil, 81476 München (DE); FREBEL, Bernd, 88045 Friedrichshafen (DE)
(86) Internationale Anmeldenummer: PCT/EP2011/061467
(87) Internationale Veröffentlichungsnummer: WO 2012/025286

(56) Entgegenhaltungen:
- EP-A2- 2 251 223
- CH-A- 313 637
- CH-A- 358 460
- DE-A1- 19 827 580
- DE-A1- 19 827 581
- DE-C- 857 387
- GB-A- 1 460 590

## Beschreibung

Die Erfindung betrifft eine Antriebseinrichtung für einen Triebwagen nach dem Oberbegriff des Patentanspruches 1, bekannt durch die CH-A-358 460. Durch die DE 198 27 580 A1 der Anmelderin wurde ein Antrieb für einen Triebwagen bekannt, wobei eine als Brennkraftmaschine ausgebildete Antriebsmaschine über ein Schaltgetriebe, eine Gelenkwelle sowie ein Wendegetriebe eine Fahrzeugachse antreibt. Das Wendegetriebe ist als separate Baueinheit an einem Achsgetriebe (Kegelradgetriebe) angeflanscht und somit auf der Achse oder an einem die Fahrzeugachse tragenden Drehgestell befestigt. Das Wendegetriebe weist zwei koaxial angeordnete, durch eine Kupplungs- und Schalteinrichtung verbundene Eingangszahnräder auf, von denen eines auf die Abtriebswelle und das andere über eine Zwischenwelle ebenfalls auf die Abtriebswelle (Kegelradritzel des Achsgetriebes) treibt. Das Achsgetriebe und die vorgeschaltete Stirnradstufe werden auch als Radsatzgetriebe bezeichnet.

In der DE 198 27 581 A1 der Anmelderin ist das o. e. Wendegetriebe detaillierter beschrieben und dargestellt. Die Antriebswelle und die Abtriebswelle des Wendegetriebes sind nicht koaxial, sondern versetzt zueinander angeordnet, was bei bestimmten Einbaubedingungen von Nachteil sein kann. Nachteilig kann es auch sein, dass das Wendegetriebe an der Fahrzeugachse angeordnet ist. Aus Sicht des Triebwagenherstellers kann es dagegen vorteilhaft sein, das Wendegetriebe nicht am Drehgestell, welches die Fahrzeugachse trägt, sondern im Bereich des Fahrzeugrahmens anzuordnen.

Es ist Aufgabe der vorliegenden Erfindung, eine Antriebseinrichtung der eingangs genannten Art zu schaffen, wobei das Wendegetriebe nicht im Bereich der Fahrzeugachse, sondern an anderer geeigneter Stelle im Antriebsstrang angeordnet ist.

Die Aufgabe der Erfindung wird durch die Merkmale des unabhängigen Anspruchs 1 gelöst. Vorteilhafte Ausgestaltungen ergeben sich aus den Unteransprüchen.

Erfindungsgemäß ist vorgesehen, dass das Wendegetriebe als eigene Baueinheit ausgebildet, in Kraftflussrichtung hinter dem Getriebe, auch Haupt- oder Stufengetriebe genannt, angeordnet und am Fahrzeugrahmen befestigt ist. Vorteilhaft bei dieser Anordnung ist, dass die Fahrzeugachse bzw. das Drehgestell kein Wendegetriebe mehr trägt, sondern lediglich ein einfaches, neutrales Radsatzgetriebe, vorzugsweise mit einer Stirn- und Kegelradstufe aufweist. Damit wird die Herstellung, Beschaffung und Lagerhaltung von Fahrzeugachsen bzw. Drehgestellen für den Triebwagen vereinfacht. Andererseits ist es von Vorteil, dass sämtliche Antriebskomponenten von der Antriebsmaschine über das Getriebe bis zum Wendegetriebe am Fahrzeugrahmen angeordnet sind. Dadurch, dass das Hauptgetriebe und das Wendegetriebe eigene Baueinheiten sind, ergibt sich der Vorteil, dass beide Getriebe jeweils separat austauschbar sind, z. B anlässlich einer Reparatur oder einer konstruktiven Änderung. Darüber hinaus sind Hauptgetriebe und Wendegetriebe auch für andere Zwecke jeweils verwendbar, sodass sich größere Produktionsstückzahlen und damit geringere Herstellkosten ergeben. Aufgrund der erfindungsgemäßen Anordnung kann auch auf ein Seriengetriebe für Nutzfahrzeuge (LKW oder Bus) zurückgegriffen werden, wodurch die Kosten reduziert werden. Weiterhin sind die Eingangswelle und die Ausgangswelle des Wendegetriebes koaxial zueinander angeordnet. Daraus ergibt sich der Vorteil, dass der gesamte Antriebsstrang in einer Flucht liegt. Vorteilhaft ist ferner, dass der Beugewinkel der abtriebsseitig an das Wendegetriebe angeschlossenen Gelenkwelle in einem zulässigen und vorteilhaften Bereich bleibt. Weiterhin ist das Wendegetriebe als Vorgelegegetriebe ausgebildet und weist eingangsseitig eine Stirnradstufe auf. Damit wird der Vorteil erreicht, dass Eingangsund Ausgangswelle des Wendegetriebes koaxial zueinander angeordnet sind. Darüber hinaus kann über die Stirnradstufe das Übersetzungsverhältnis angepasst werden. Erfindungsgemäss ist über die Stirnradstufe eine Vorgelegewelle antreibbar, die über eine Schalteinrichtung entweder mit einer ersten abtriebsseitigen Stirnradstufe oder mit einer zweiten abtriebsseitigen Stirnradstufe mit Zwischenwelle kuppelbar ist. Damit wird ein Umschalten der Fahrtrichtung ermöglicht. Nach einer vorteilhaften Ausführungsform ist das Hauptgetriebe als Automatgetriebe mit einer geeigneten Anzahl von Schaltstufen und einem hydrodynamischen Drehmomentwandler ausgebildet. Daraus ergeben sich die bekannten Vorteile eines Stufenautomatgetriebes.

Nach einer vorteilhaften Ausführungsform ist zwischen Automatgetriebe und Wendegetriebe eine Kupplung angeordnet, die auch Fluchtungsfehler ausgleichen soll. Dadurch ergibt sich eine axial gedrungene Bauweise. Je nach Einbaubedingungen im Triebwagen kann jedoch auch eine Gelenkwelle zwischen Automatgetriebe und Wendegetriebe vorgesehen sein.

Das Wendegetriebe ist abtriebsseitig über eine Gelenkwelle mit dem Radsatzgetriebe der Fahrzeugachse verbunden.

Nach einer weiteren vorteilhaften Ausführungsform sind das Wendegetriebe und das Automatgetriebe als Antriebseinheit ausgebildet. Beide Getriebe werden zwar separat hergestellt, jedoch baulich - z.B. durch eine Flanschverbindung - zu einer Antriebseinheit zusammengefasst, sodass sie auch als Antriebseinheit auf dem Fahrzeugrahmen montiert werden können.

Ein Ausführungsbeispiel der Erfindung ist in der Zeichnung dargestellt und wird im Folgenden näher beschrieben, wobei sich aus der Beschreibung und/oder der Zeichnung weitere Merkmale und/oder Vorteile ergeben können. Es zeigen
- Fig. 1: eine schematische Darstellung der erfindungsgemäßen Antriebseinrichtung für einen Triebwagen und
- Fig. 2: ein erfindungsgemäßes Wendegetriebe.

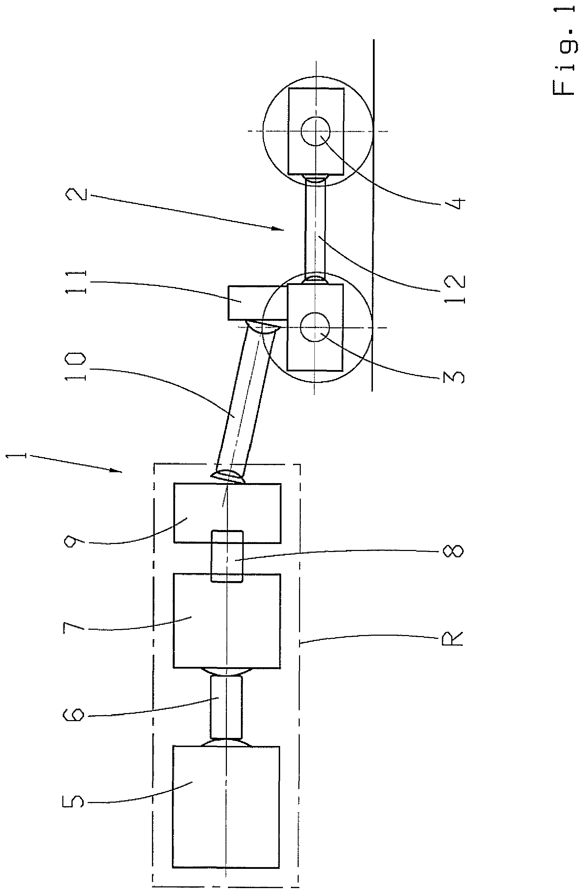

Fig. 1 zeigt eine Antriebseinrichtung 1, auch Antriebsanordnung genannt, für einen nicht dargestellten Triebwagen, d.h. für ein Schienenfahrzeug. Die Antriebseinrichtung 1 umfasst - in Kraftflussrichtung gesehen - eine Antriebsmaschine 5, ausgebildet als Brennkraftmaschine, vorzugsweise als Dieselmotor, eine erste Gelenkwelle 6, ein Automatgetriebe 7, eine Kupplungseinrichtung 8, ein Wendegetriebe 9 sowie eine zweite Gelenkwelle 10. Es sind auch Ausführungen möglich, bei denen die Antriebsmaschine 5 und das Getriebe 7 direkt aneinander angeflanscht sind, sodass die Gelenkwelle 6 entfällt. Der nicht dargestellte Triebwagen weist einen Fahrzeugrahmen, welcher durch ein strichpunktiertes Rechteck R schematisch dargestellt ist, sowie mindestens ein Drehgestell 2 auf. Auf dem oder am Fahrzeugrahmen R sind die Antriebskomponenten 5 bis 9 angeordnet und befestigt. Das Drehgestell 2 ist auf nicht dargestellte Weise mit dem Fahrzeugrahmen R verbunden und trägt den Fahrzeugrahmen. Die Relativbewegungen des Drehgestells 2 gegenüber dem Fahrzeugrahmen R werden durch die zweite Gelenkwelle 10 ausgeglichen, welche über ein Radsatzgetriebe 11 die erste Fahrzeugachse 3 antreibt. Das Radsatzgetriebe 11 kann eine Stirnradstufe und eine Kegelradstufe umfassen. Über eine dritte Gelenkwelle 12 wird die zweite Fahrzeugachse 4 angetrieben. Die vorliegende Erfindung umfasst jedoch auch Antriebseinrichtungen für einen Triebwagen mit Einzelachsantrieb, bei denen jeweils nur eine Achse über einen Antriebsstrang angetrieben wird. Das Automatgetriebe 7 ist als Stufenautomat ausgebildet und weist somit mehrere Schaltstufen auf. Es umfasst ferner einen hydrodynamischen Drehmomentwandler als Anfahrhilfe. Bevorzugt handelt es sich um ein Automatgetriebe, welches bereits serienmäßig für schwere Nutzfahrzeuge verwendet wird. Das Wendegetriebe 9 stellt eine Abwandlung des aus der eingangs genannten DE 198 27 581 A1 bekannten Wendegetriebes dar - allerdings in koaxialer Bauweise. Dadurch kann der Beugewinkel der abtriebsseitigen Gelenkwelle 10 zum Radsatzgetriebe 11 im zulässigen Rahmen gehalten werden. Das Wendegetriebe 9 erlaubt es, sämtliche Gänge des Automatgetriebes 7 in beiden Fahrtrichtungen zu betreiben, was für einen Triebwagen auf der Schiene zwingend erforderlich, bei einem Nutzfahrzeug jedoch nicht üblich ist. Durch diese Kombination eines Automatgetriebes für Nutzfahrzeuge mit einem abgewandelten Wendegetriebe für Schienenfahrzeuge ergibt sich eine weitere Anwendungs- und Einsatzmöglichkeit für das Automatgetriebe 7.

Aufgrund der Kupplung 8 können das Automatgetriebe 7 und das Wendegetriebe 9 als axial kurz bauende Antriebseinheit zusammengefasst, z.B. aneinander geflanscht werden. Möglich ist jedoch auch, das Wendegetriebe 9 in einer sogenannten "stand alone"-Lösung separat am Fahrzeugrahmen R aufzuhängen und über eine Gelenkwelle 8 mit dem Automatgetriebe 7 zu verbinden.

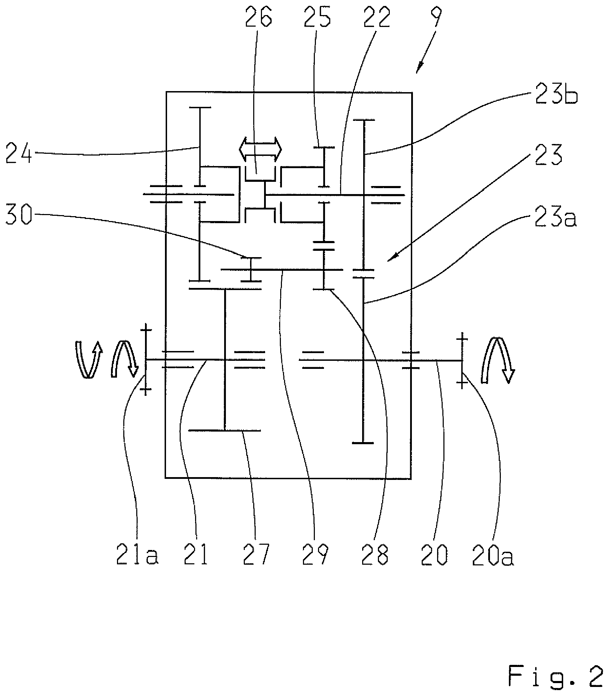

Fig. 2 zeigt das Wendegetriebe 9 aus Fig. 1 in einer schematischen Darstellung. Das Wendegetriebe 9 weist eine Antriebswelle 20 mit einem Antriebsflansch 20a sowie eine Abtriebswelle 21 mit einem Abtriebsflansch 21 a auf. Die Antriebswelle 20 ist gemäß Fig. 1 mit der Kupplung 8 oder auch mit einer Gelenkwelle verbunden, während die Abtriebswelle 21 über den Abtriebsflansch 21 a mit der Gelenkwelle 10 verbunden ist. Das Wendegetriebe 9 weist ferner eine Vorgelegewelle 22 auf, welche über eine Stirnradstufe 23, bestehend aus dem Stirnrad 23a auf der Antriebswelle 20 und dem Stirnrad 23b auf der Vorgelegewelle 22, mit der Antriebswelle 20 verbunden ist. Auf der Vorgelegewelle 22 sind ein erstes Zahnrad 24 und ein zweites Zahnrad 25 gelagert, welche durch eine Schalteinrichtung 26 wechselweise mit der Vorgelegewelle 22 kuppelbar sind. Das erste Zahnrad 24 kämmt mit einem Abtriebszahnrad 27, welches drehfest auf der Abtriebswelle 21 angeordnet ist. Das zweite Zahnrad 25 kämmt mit einem ersten Zwischenrad 28, welches auf einer Zwischenwelle 29 angeordnet ist, die ein zweites Zwischenrad 30 trägt, welches mit dem Abtriebszahnrad 27 kämmt. Durch die Stirnradstufe 23 wird gegenüber dem durch die DE 198 27 581 A1 bekannten Wendegetriebe eine koaxiale Bauweise für Antriebswelle 20 und Abtriebswelle 21 erreicht. Durch die Schalteinrichtung 26 kann ein Drehrichtungswechsel zwischen Antriebswelle 20 und Abtriebswelle 21 herbeigeführt werden.

### Bezugszeichen

- 1: Antriebseinrichtung
- 2: Drehgestell
- 3: erste Fahrzeugachse
- 4: zweite Fahrzeugachse
- 5: Antriebsmaschine
- 6: erste Gelenkwelle
- 7: Automatgetriebe
- 8: Kupplungseinrichtung
- 9: Wendegetriebe
- 10: zweite Gelenkwelle
- 11: Radsatzgetriebe
- 12: dritte Gelenkwelle

- 20: Antriebswelle (Eingangswelle)
- 20a: Antriebsflansch
- 21: Abtriebswelle (Ausgangswelle)
- 21 a: Abtriebsflansch
- 22: Vorgelegewelle
- 23: Stirnradstufe
- 23a: erstes Stirnrad
- 23b: zweites Stirnrad
- 24: erstes Zahnrad
- 25: zweites Zahnrad
- 26: Schalteinrichtung
- 27: Abtriebszahnrad
- 28: erstes Zwischenrad
- 29: Zwischenradwelle
- 30: zweites Zwischenrad

- R: Fahrzeugrahmen

## Patentansprüche

1. Antriebseinrichtung für einen Triebwagen, der einen Fahrzeugrahmen (R) und mindestens ein Drehgestell (2) mit mindestens einer antreibbaren Fahrzeugachse (3, 4) aufweist, wobei die Antriebseinrichtung (1) eine als Brennkraftmaschine ausgebildete Antriebsmaschine (5), ein Getriebe (7), ein Wendegetriebe, mindestens eine Gelenkwelle (6, 10) sowie ein Radsatzgetriebe (11) umfasst und wobei die Antriebsmaschine (5) sowie das Getriebe (7) am Fahrzeugrahmen (R) und das Radsatzgetriebe (11) am Drehgestell (2) anordnenbar sind, wobei das Wendegetriebe (9) als eigene Baueinheit ausgebildet, in Kraftflussrichtung hinter dem Getriebe (7) angeordnet und am Fahrzeugrahmen (R) befestigbar ist, **dadurch gekennzeichnet, dass** das Wendegetriebe (9) eine Eingangswelle (20) und eine Ausgangswelle (21) aufweist, die beide koaxial zueinander angeordnet sind, wobei das Wendegetriebe (9) als Vorgelegegetriebe ausgebildet ist und eingangsseitig eine Stirnradstufe (23) aufweist und wobei über die Stirnradstufe (23) eine Vorgelegewelle (22) antreibbar ist, die über eine Schalteinrichtung (26) entweder mit einer abtriebsseitigen einfachen Stirnradstufe (24, 27) oder einer abtriebsseitigen Stirnradstufe (25, 27) mit Zwischenwelle (29) kuppelbar ist.

2. Antriebseinrechtung nach Anspruch 1, **dadurch gekennzeichnet, dass** das Getriebe als Automatgetriebe (7) ausgebildet ist.

3. Antriebseinrichtung nach Anspruch 1 oder 2, **dadurch gekennzeichnet, dass** das Wendegetriebe (9) mit dem Automatgetriebe (7) durch eine Kupplung (8) oder eine Gelenkwelle (8) verbunden ist.

4. Antriebseinrichtung nach Anspruch 1, 2 oder 3, **dadurch gekennzeichnet, dass** das Wendegetriebe (9) mit dem Radsatzgetriebe (11) durch eine Gelenkwelle (10) verbunden ist.

5. Antriebseinrichtung nach einem der Ansprüche 1 bis 4, **dadurch gekennzeichnet, dass** das Wendegetriebe (9) und das Automatgetriebe (7) als Antriebseinheit ausgebildet sind.

## Claims

1. Drive device for a railcar which has a vehicle frame (R) and at least one bogie (2) with at least one drivable vehicle axle (3, 4), the drive device (1) comprising a drive machine (5) which is configured as an internal combustion engine, a transmission (7), a reversing gear mechanism, at least one articulated shaft (6, 10) and a final drive (11), and it being possible for the drive machine (5) and the transmission (7) to be arranged on the vehicle frame (R) and for the final drive (11) to be arranged on the bogie (2), the reversing gear mechanism (9) being configured as a dedicated structural unit, being arranged downstream of the transmission (7) in the power flow direction, and being capable of being fastened to the vehicle frame (R), **characterized in that** the reversing gear mechanism (9) has an input shaft (20) and an output shaft (21) which are both arranged coaxially with respect to one another, the reversing gear mechanism (9) being configured as a countershaft gear mechanism and having a spur gear stage (23) on the input side, and it being possible for a countershaft (22) to be driven via the spur gear stage (23), which countershaft (22) can be coupled via a shifting device (26) either to an output-side simple spur gear stage (24, 27) or an output-side spur gear stage (25, 27) with an intermediate shaft (29) .

2. Drive device according to Claim 1, **characterized in that** the transmission is configured as an automatic transmission (7).

3. Drive device according to Claim 1 or 2, **characterized in that** the reversing gear mechanism (9) is connected to the automatic transmission (7) by way of a clutch (8) or an articulated shaft (8).

4. Drive device according to Claim 1, 2 or 3, **characterized in that** the reversing gear mechanism (9) is connected to the final drive (11) by way of an articulated shaft (10).

5. Drive device according to one of Claims 1 to 4, **characterized in that** the reversing gear mechanism (9) and the automatic transmission (7) are configured as a drive unit.

## Revendications

1. Dispositif d'entraînement pour une automotrice, qui présente un châssis de véhicule (R) et au moins un bogie (2) avec au moins un essieu de véhicule pouvant être entraîné (3, 4), le dispositif d'entraînement (1) comprenant une machine d'entraînement (5) réalisée sous forme de moteur à combustion interne, une transmission (7), une transmission réversible, au moins un arbre articulé (6, 10) et une transmission finale (11) et la machine d'entraînement (5) ainsi que la transmission (7) pouvant être disposées sur le châssis de véhicule (R) et la transmission finale (11) pouvant être disposée sur le bogie (2), la transmission réversible (9) étant réalisée sous forme d'unité structurelle propre, étant disposée dans le sens du flux de force derrière la transmission (7) et pouvant être fixée au châssis de véhicule (R), **caractérisé en ce que** la transmission réversible (9) présente un arbre d'entrée (20) et un arbre de sortie (21) qui sont tous les deux disposés coaxialement l'un par rapport à l'autre, la transmission réversible (9) étant réalisée sous forme de transmission de renvoi et présentant du côté de l'entrée un étage à pignons droits (23) et un arbre de renvoi (22) pouvant être entraîné par le biais de l'étage à pignons droits (23), lequel arbre de renvoi peut être accouplé par le biais d'un dispositif de commutation (26) soit à un étage à pignons droits simple (24, 27) du côté de la prise de force soit à un étage à pignons droits (25, 27) du côté de la prise de force avec un arbre intermédiaire (29).

2. Dispositif d'entraînement selon la revendication 1, **caractérisé en ce que** la transmission est réalisée sous forme de transmission automatique (7) .

3. Dispositif d'entraînement selon la revendication 1 ou 2, **caractérisé en ce que** la transmission réversible (9) est raccordée à la transmission automatique (7) par un embrayage (8) ou un arbre articulé (8).

4. Dispositif d'entraînement selon la revendication 1, 2 ou 3, **caractérisé en ce que** la transmission réversible (9) est raccordée à la transmission finale (11) par un arbre articulé (10).

5. Dispositif d'entraînement selon l'une quelconque des revendications 1 à 4, **caractérisé en ce que** la transmission réversible (9) et la transmission automatique (7) sont réalisées sous forme d'unité d'entraînement.
